**Europäisches Patentamt**

**European Patent Office**

**Office européen des brevets**

(19)

(11) Veröffentlichungsnummer: **0 054 100 B2**

(12) # NEUE EUROPÄISCHE PATENTSCHRIFT

(45) Veröffentlichungstag der neuen Patentschrift: **18.10.89**

(51) Int. Cl.⁴: **F 16 D 65/32, B 60 T 17/08**

(21) Anmeldenummer: **81106111.8**

(22) Anmeldetag: **05.08.81**

(54) Mechanische Schnell-Löseeinrichtung für Federspeicher-Bremszylinder.

(30) Priorität: **11.12.80 DE 3046669**

(43) Veröffentlichungstag der Anmeldung:
**23.06.82 Patentblatt 82/25**

(45) Bekanntmachung des Hinweises auf die Patenterteilung:
**21.11.84 Patentblatt 84/47**

(45) Bekanntmachung des Hinweises auf die Entscheidung
über den Einspruch:
**18.10.89 Patentblatt 89/42**

(84) Benannte Vertragsstaaten:
**AT CH DE FR GB IT LI SE**

(56) Entgegenhaltungen:
**DE-U- 7 204 850**
**FR-A- 2 128 048**
**GB-A- 1 166 544**
**US-A- 3 183 791**
**US-A- 4 080 875**

(73) Patentinhaber: **WABCO Westinghouse
Fahrzeugbremsen GmbH, Am Lindener
Hafen 21 Postfach 91 12 80, D-3000 Hannover 91 (DE)**

(72) Erfinder: **Mylius, Horst, Fritz Meyer Strasse 7,
D-3008 Garbsen 1 (DE)**
Erfinder: **Ristic, Momcilo, Kurzekamp 3,
D-3008 Garbsen 1 (DE)**
Erfinder: **Frania, Josef, An der Bauerwiese 10 d,
D-3000 Hannover (DE)**

(74) Vertreter: **Schrödter, Manfred, WABCO Westinghouse
Fahrzeugbremsen GmbH Am Lindener
Hafen 21 Postfach 91 12 80, D-3000 Hannover 91 (DE)**

EP 0 054 100 B2

## Beschreibung

Die Erfindung betrifft eine mechanische Schnell-Löseeinrichtung für Federspeicher-Bremszylinder, insbesondere in Fahrzeugbremsanlagen gemäss dem Oberbegriff des Anspruchs 1.

Mechanische Löseeinrichtungen dieser Art sind durch die DE-U 7 204 850 bekannt. Sie dienen dem Zweck, die bei entspannter Speicherfeder in Bremsstellung befindlichen Bremsen durch mechanisches Spannen der Speicherfeder zu lösen.

Die Verwendung dieser Löseeinrichtung ist jedoch nur für Federspeicher-Bremszylinder geeignet, bei welchen die Übertragung der Bremsfunktion auf die Radbremsen bzw. auf deren Hebeleien durch eine mittels Bowdenzug durch die Spannung der Speicherfeder ziehende Bewegung ausgelöst wird. Bei Einsatzbedingungen von Federspeicher-Bremszylindern, bei welchen es erforderlich ist, dass die Bremsfunktion durch eine drückende Bewegung ausgelöst wird, kann die Übertragung der Bewegung auf die Radbremsen nicht mittels Bowdenzug erfolgen. Dies ist vor allem dann nicht möglich, wenn der einem Hilfsbremskreis zugeordnete Federspeicher-Bremszylinder mit dem einem Betriebsbremskreis zugeordneten Bremszylinder in einem gemeinsamen Gehäuse angeordnet ist und die Betätigung der auf die Radbremsen wirkenden Übertragungseinrichtung von einer gemeinsamen Kolbenstange ausgelöst wird.

Wird die Bremsbetätigung von einem Federspeicher-Bremszylinder auf beide Radbremsen einer Fahrzeugachse mittels Bowdenzügen übertragen, so erfordert es viel Aufwand, die Lösefunktion der Schnell-Löseeinrichtung auf beide Radbremsen gleichzeitig zu übertragen.

Aus der US-A 4 080 875, dort insbesondere den Fig. 5 und 6, ist eine mechanische Schnell-Löseeinrichtung für Federspeicher-Bremszylinder der gattungsgemässen Art bekannt. Dieser Stand der Technik zeigt in einem Zylindergehäuse einen Kolben mit einer hohlen Kolbenstange, welche radiale Bohrungen aufweist. In einer Innenbohrung des Kolbens ist eine Ringnut vorgesehen. Im Hohlraum der Kolbenstange ist ein Kupplungsglied angeordnet, welches an seinem äusseren Durchmesser radiale Ausnehmungen aufweist. Kugeln zur Herstellung einer kraftschlüssigen Verbindung zwischen Kolben und Kolbenstange sind in den Ausnehmungen des Kupplungsgliedes gelagert. Das Kupplungsglied ist in zwei Stellungen drehbar. Die Ausnehmungen im Kupplungsglied sind so ausgebildet, dass die Kugeln in der einen Stellung (Sperrstellung) des Kupplungsgliedes durch die radialen Bohrungen in der Kolbenstange hindurch in die Ringnut in der Innenbohrung des Kolbens gedrückt werden, wodurch der Kraftschluss zwischen Kolben und Kolbenstange hergestellt wird und in der anderen Stellung (Lösestellung) aus der Ringnut in der Innenbohrung des Kolbens radial nach innen ausweichen können, wodurch der Kraftschluss getrennt wird. In die hohle Kolbenstange ragt von ausserhalb des Zylindergehäuses eine von aussen drehbare Welle hinein, welche über einen hülsenförmigen, ebenfalls innerhalb der Kolbenstange angeordneten Fortsatz des Kupplungsgliedes mit dem Kupplungsglied drehfest und längs verschiebbar verbunden ist.

Diese vorstehend beschriebene Lösung hat folgende wesentliche Nachteile:

Die hohle Kolbenstange ist kompliziert und aufwendig. Der Kolben ist infolge der innen einzustechenden Ringnut ebenfalls kompliziert und aufwendig und muss zudem aus einem Werkstoff bestehen, der der Linienbelastung durch die Kugeln standhält. Schliesslich muss die Übertragung der Drehbewegung von der Welle auf den hülsenförmigen Fortsatz des Kupplungsgliedes wegen der beengten Verhältnisse innerhalb des Hohlraums der Kolbenstange an einem kleinen Durchmesser und demzufolge mit grossen Umfangskräften erfolgen.

Die GB-A 1 166 544 zeigt eine Schnell-Löseeinrichtung für Federspeicher-Bremszylinder, bei der die Verbindung zwischen dem Kolben und der Kolbenstange aus einem Kugelgesperre besteht. Die Kolbenstange weist eine Ringnut und der Kolben ein die Kolbenstange umfassendes Kolbenrohr mit Querbohrungen auf. Das Kolbenrohr umfassend ist ein axial verschiebbares Kupplungsglied angeordnet, das im Sperrzustand von einer sich am Kolbenrohr abstützenden Feder gegen einen am Kolbenrohr ausgebildeten Anschlag vorgespannt wird. Die Kugeln des Kugelgesperres sind im Sperrzustand zwischen der Innenfläche des Kupplungsgliedes und der Ringnut in der Kolbenstange eingespannt und durchdringen die Querbohrungen im Kolbenrohr. Der Kraftfluss verläuft in Sperrzustand vom Kolben über das Kolbenrohr und die Flanken der Querbohrungen auf die Kugeln und von diesen über die Flanken der Ringnut auf die Kolbenstange. Dabei an den Kugeln entstehende radiale Stützkräfte werden von dem Kupplungsglied aufgenommen. Zum Lösen des Kugelgesperres wird das Kupplungsglied von Hand gegen die Kraft der Feder axial bis über die Querbohrung im Kolbenrohr hinaus zurückgeschoben. Infolge nun fehlender Aufnahme der radialen Stützkräfte springen die Kugeln aus der Ringnut heraus, wodurch der Kraftschluss zwischen Kolben und Kolbenstangen aufgehoben und das Kugelgesperre entsperrt wird.

Die US-A 3 183 791 zeigt eine Löseeinrichtung für einen nicht abgestuft betätigbaren Federspeicher-Notbremszylinder, der über ein Kugelgesperre in Lösestellung haltbar ist. In diesem Falle ist die die Ringnut aufweisende Kolbenstange fest mit dem Kolben verbunden. Im Sperrzustand wird das die Kolbenstange axial verschiebbar umfassende Kupplungsglied vom Vorratsdruck des Bremssystems gegen die Kraft einer Rückstellfeder gegen einen Gehäuseanschlag gehalten, wobei die Kugeln des Kugelgesperres zwischen dem Kupplungsglied und der Ringnut eingespannt sind und den Kolben über die Flanken der Ringnut und die Kolbenstange gegen den Gehäuseanschlag abstützen. Auch in diesem Fall nimmt das Kupplungsglied die an den Kugeln entstehenden radialen Stützkräfte auf. Bei Abfall des Vorratsdrucks unter einen durch die Kraft der Rückstellfeder vorbestimmten Wert oder bei einer vom Fahrzeug- bzw. Geräteführer herbeigeführten Druckentlastung des Kupplungsgliedes wird dieses von der Rückstellfeder von dem Gehäuseanschlag hinweg zurückgeschoben, wobei die Aufnahme der an dem Kugeln wirkenden radialen Stützkräfte entfällt, das Kugelgesperre gelöst wird und der Federspeicher-Notbremszylinder in Bremsstellung geht.

Die beiden letztgenannten Druckschriften geben keine Hinweise zur Behebung der oben beschriebenen Nachteile der gattungsgemässen mechanischen Schnell-Löseeinrichtung für Federspeicher-Bremszylinder.

Aufgabe der vorliegenden Erfindung ist es deshalb, eine Schnell-Löseeinrichtung für Federspeicher-Bremszylinder der gattungsgemässen genannten Art so zu verbessern, dass die Kolbenstange und der Kolben vereinfacht und verbilligt werden, der Kolbenwerkstoff unabhängig von den an der Kugelverbindung auftretenden Linienbelastungen wählbar ist und die Kräfte in der drehfesten Verbindung zwischen Welle und Kupplungsglied herabgesetzt werden.

Dabei soll die manuelle Betätigung der Löseeinrichtung von aussen leicht zugänglich sein und der Winkel der Drehbewegung relativ klein sein.

Diese Aufgabe wird durch die in dem Patentanspruch 1 aufgeführte Erfindung gelöst.

Die Erfindung weist u.a. den Vorteil auf, dass der mittels einer kleinen Drehbewegung erfolgende Entriegelungsvorgang die Voraussetzung dafür bietet, dass für alle erwähnten Einsatzbedingungen des Federspeicher-Bremszylinders dieselbe Schnell-Löseeinrichtung verwendbar ist. Ausserdem wird eine geringe Bautiefe des Zylinders erzielt.

Vorteilhafte Weiterbildungen und Ausgestaltungen der erfindungsgemässen Lösung sind den Unteransprüchen zu entnehmen.

Die erfindungsgemässe Lösung soll nun anhand von Ausführungsbeispielen, die in der Zeichnung dargestellt sind, näher erläutert werden. Es zeigt

Fig. 1 einen Federspeicher-Bremszylinder mit einer Schnell-Löseeinrichtung.

Fig. 2 einen Federspeicher-Bremszylinder in ziehender Ausführung.

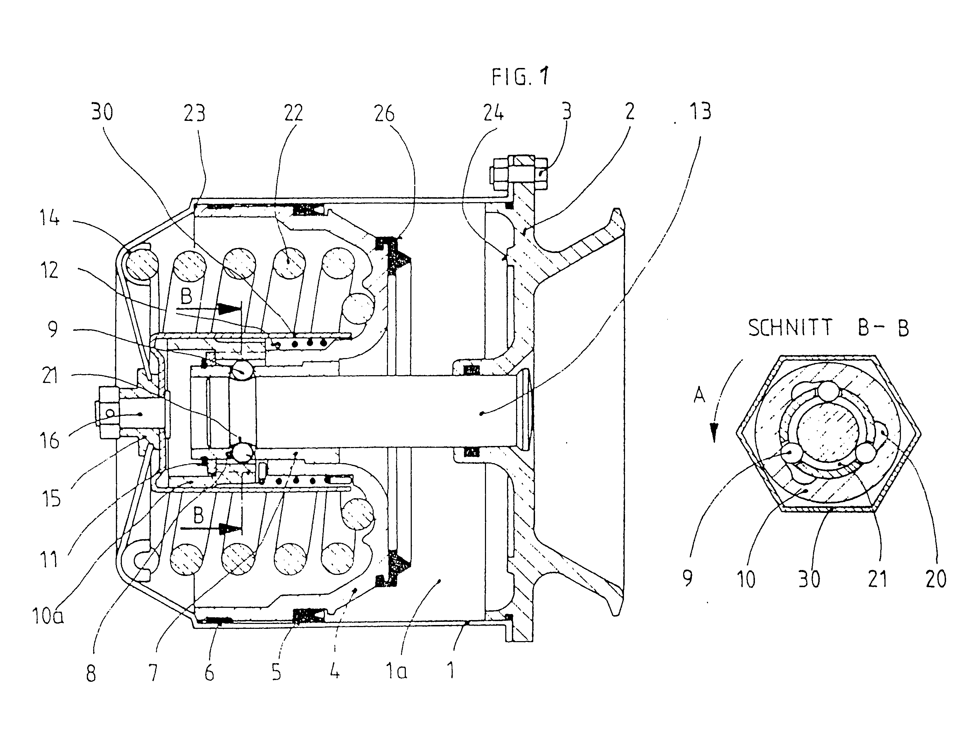

Der Federspeicher-Bremszylinder gemäss Fig. 1 besteht aus einem Zylindergehäuse 1, das mit einem Flansch 2 mittels Schrauben 3 verbunden ist. Im Zylindergehäuse 1 ist ein Kolben 4 mit einem Dichtring 5, einem Führungsring 6, einer Buchse 7 mit radialen Bohrungen 8, Kugeln 9, einem Kupplungsglied 10a, einem Sicherungsring 11, einer Drehfeder 42 und eine Kolbenstange 13 eingebaut. Im Boden 14 des Zylindergehäuses 1 ist in einem mit dem Boden 14 fest verankerten Stutzen 15 eine drehbar gelagerte Welle 16 angeordnet. Das in das Zylindergehäuse 1 hineinragende Ende der Welle 16 ist mit einem topfförmigen Kupplungsstück 30 fest verbunden. Das Kupplungsstück 30 umgreift mit seiner topfförmigen, mit einem Sechskant versehenen Ausbildung das an einem Teil des Umfanges als Sechskant geformte Kupplungsglied 10a. Im Kupplungsglied 10a sind ausserdem besonders geformte Aussparungen 20 und in der Kolbenstange 13 eine Ringnut 21 vorgesehen. Eine als Kraftspeicher vorgesehene Druckfeder 22 ist einmal im Kolbenboden und einmal im Zylinderboden 14 gelagert. In Lösestellung der Bremse befindet sich der Kolben 4 infolge Druckbeaufschlagung einer Kammer 1a in der gezeigten Stellung an einem Anschlag 23 des Zylindergehäuses 1. Bei Ausfall des Druckmittels wird der Kolben 4 durch die Kraft der Druckfeder 22 in Bremsstellung geführt. Die Kraft der Druckfeder 22 wird über den Kolben 4, die Buchse 7, das Kupplungsglied 10a, die Stahlkugeln 9 und die Ringnut 21 auf die Kolbenstange 13 übertragen. Durch die vorgespannte Drehfeder 12 wird das Kupplungsglied 10a in Drehrichtung «A» stets mit enem bestimmten Drehmoment beaufschlagt und hält das Kupplungsglied 10a dadurch in der im Schnitt B-B gezeichneten Riegelstellung. In dieser Stellung sind alle durch Kraftfluss beaufschlagten Teile formschlüsig verbunden. Durch Drehung der Welle 16 wird auch über das fest verbundene Kupplungsstück 30 das Kupplungsglied 10a gegen die vorgespannte Drehfeder 12 mitgenommen. Bei einem bestimmten Drehwinkel müssen die Kugeln 9 infolge der auf sie wirkenden Kräfte in die Aussparungen 20 ausweichen. Der Kraftfluss, Druckfeder-Kolben-Kolbenstange, ist entkoppelt und die Bremse gelöst. Der Kolben 4 bewegt sich zusammen mit dem Kupplungsglied 10a und den Kugeln 9 ohne Kolbenstange 13 durch die Kraft der Druckfeder 22 bis zu einem Anschlag 24 am Flansch 2. Die Kolbenstange 13 wird kraflos. Mit vorhandenem Druckmittel wird der Kolben 4 gegen die Vorspannung der Druckfeder 22 wieder in seine Endstellung an einen Zylinderanschlag 23 bewegt. Haben die Stahlkugeln 9 auf der Kolbenstange 13 die Position über die Ringnut 21 eingenommen, schiebt das Kupplungsglied 10a infolge Drehbewegung durch die Drehfeder 12 die Kubeln 9 über die Schräge der Aussparung 20 wieder in die ursprüngliche Riegelstellung. Durch weitere Drehung des Kupplungsgliedes 10a erfolgt gleichzeitig eine formschlüssige Verriegelung der Kugeln 9. Der Federspreicher-Bremszylinder ist dadurch wieder automatisch in Bremsbereitschaftsstellung.

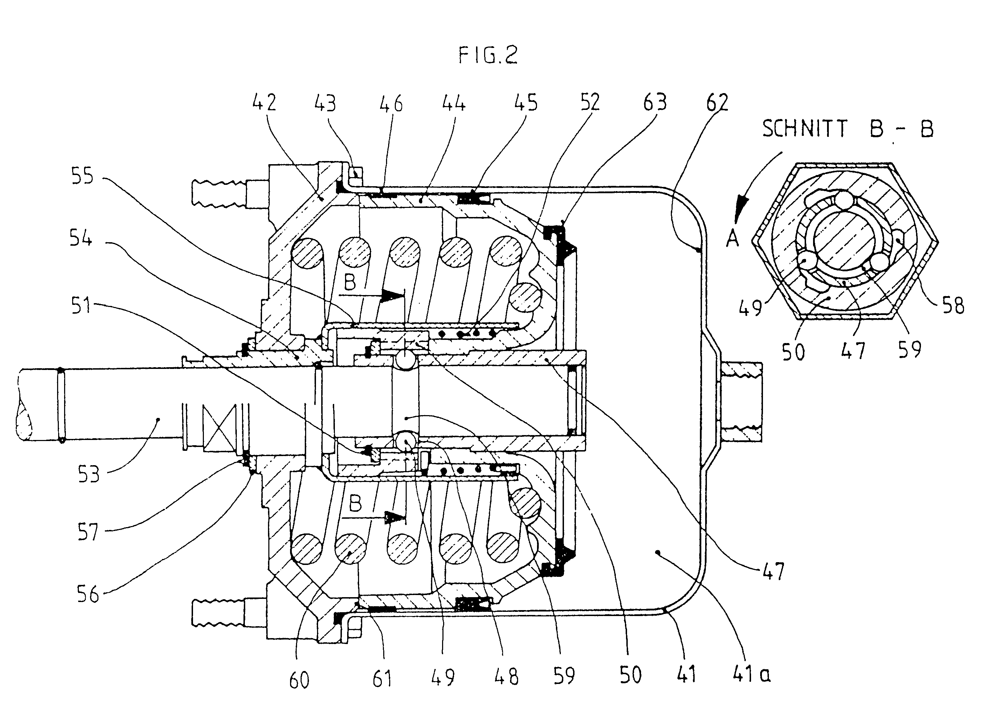

Der Federspeicher-Bremszylinder in ziehender Ausführung gemäss Fig. 2 besteht aus einem Zylindergehäuse 41, das mit einem Flansch 42 mittels Schrauben 43 verbunden ist. Im Zylindergehäuse 41 ist ein Kolben 44 mit einem Dichtring 45, einem Führungsring 46, einer Buchse 47 mit radialen Bohrungen 48 Kugeln 49, einem Kupplungsglied 50, einem Sicherungsring 51, einer Drehfeder 52 und einer Kolbenstange 53 eingebaut. Im Flansch 42 ist eine drehbar gelagerte Buchse 54 mit Schlüsselfläche angeordnet. Die Buchse 54 ist ausserdem mit einem topfförmigen Kupplungsstück 55 fest verbunden und mittels einer Scheibe 56 und einem Sicherungsring 57 im Flansch 42 gegen Verschiebung gesichert. Das Kupplungsstück 55 umgreift mit seiner topfförmigen, mit einem Sechskant versehenen Ausbildung das an einem Teil des Umfangs als Sechskant ausgebildete Kupplungsglied 50. Im Kupplungsglied 50 sind ausserdem besonders geformte Aussparungen 58 und in der Kolbenstange 53 eine Ringnut 59 vorgesehen. Eine als Kraftspeicher vorgesehene Druckfeder 60 ist einmal am Flanschboden und einem am Kolbenboden gelagert. In Lösestellung der Bremse befindet sich der Kolben 44 infolge Druckbeaufschlagung der Kolbenfläche in der gezeigten Stellung an einem Anschlag 61 des Flanschen 42. Bei Ausfall des Druckmittels wird der Kolben 44 in Bremsstellung geführt. Die Kraft der Druckfeder 60 wird über den Kolben 44, die Buchse 47, das Kupplungsglied 50 und die Ringnut 59 auf die Kolbenstange 53 übertragen. Durch Drehung der Buchse 54 wird über das Kupplungsstück 55 das Kupplungsglied 50 gegen die vorgespannte Drehfeder 52 mitgenommen, bis die Kugeln 49 infolge der auf sie wirkenden Kräfte in die Aussparungen 58 ausweichen. Der Kraftfluss, Druckfeder-Kolben-Kolbenstange, ist dadurch entkoppelt und die Bremse gelöst. Die Kolbenstange 53 wird kraftlos und der Kolben 44 bewegt sich zusammen mit dem Kupplungsglied 50 und den Kugeln 49 ohne Kolbenstange 53 bis zu dem Zylinderboden 62 als Anschlag. Mit vorhandenem Druckmittel wird der Kolben 44 wieder in die gezeigte Stellung an Anschlag 61 bewegt. Haben die Kugeln 49 auf der Kolbenstange 53 die Position über die Ringnut 59 eingenommen, so schiebt das Kupplungsglied 50 infolge Drehbewegung durch die Drehfeder 52 die Kugeln 49 über die Schrägen der Ausnehmungen 58 wieder in die ursprüngliche Riegelstellung. Durch weitere Drehung des Kupplungsgliedes 50 erfolgt gleichzeitig eine formschlüssige Verriegelung der Kugeln 49. Der Federspeicher-Bremszylinder ist dadurch wieder automatisch in Bremsbereitschaftsstellung.

Der Kolben 4 bzw. 44 kann auch als Membrankolben ausgebildet sein.

Weiterhin kann der in drückender Ausführung dargestellte Federspeicher-Bremszylinder nach Fig. 1 mit einem Betriebsbremszylinder gekoppelt werden.

Patentansprüche

1. Mechanische Schnell-Löseeinrichtung für Federspeicher-Bremszylinder, insbesondere in Fahrzeugbremsanlagen, welche folgende Merkmale aufweist:

a) in einem Zylindergehäuse (1, 41) ist ein mit einer einstückigen Kolbenstange (13, 53) verbundener Kolben (4, 44) angeordnet, der durch die Kraft einer vollständig innerhalb des Zylindergehäuses (1, 41) angeordneten und innerhalb des Aussenumfangs des Kolbens (4, 44) an diesem angreifenden Druckfeder (22, 60) in Bremsstellung und durch Beaufschlagung mit einem Druckmittel in eine Lösestellung bringbar ist;

b) die Verbindung zwischen dem Kolben (4, 44) und der Kolbenstange (13, 53) besteht aus einem Kugelgesperre (7, 9, 10a, 21 bzw. 47, 49, 50, 59) mit wenigstens einer Kugel (9, 49);

c) das Kugelgesperre weist ein Kupplungsglied (10a, 50) mit radialen Aussparungen (20, 58) zur Aufnahme der Kugeln (9, 49) auf;

d) das Kupplungsglied (10a, 50) ist in zwei Stellungen drehbar, in deren einer (Sperrstellung) es das Kugelgesperre (7, 9, 10a, 21 bzw. 47, 49, 50, 59) verriegelt und in deren anderer (Lösestellung) es das Kugelgesperre entriegelt;

e) es ist eine Drehfeder (12) vorgesehen, welche das Kupplungsglied (10a, 50) in die Sperrstellung zurückstellt;

f) zur Drehung des Kupplungsgliedes (10a, 50) in die Lösestellung ist eine von aussen betätigbare, in das Zylindergehäuse (1, 41) hineinragende Welle (16, 54) vorgesehen;

gekennzeichnete durch folgende Merkmale:

g) das Kugelgesperre (7, 9, 10a, 21 bzw. 47, 49, 50, 59) weist eine konzentrisch zum Kolben (4, 44) angeordnete und mit dem Kolben (4, 44) in Bremsbetätigungsrichtung in Wirkverbindung stehende, über die Kolbenstange (13, 53) geschobene Buchse (7, 47) auf;

h) die Buchse (7, 47) enthält radiale Bohrungen (8, 48) zur Aufnahme der Kugeln (9, 49) und deren Sicherung in axialer und in Umfangsrichtung;

i) die Kolbenstange (13, 53) ist auf ihrem Aussendurchmesser mit einer Ringnut (21, 59) versehen, welche bei Sperrstellung des Kupplungsglieds (10a, 50) die Kugeln (9, 49) aufnimmt;

k) das zylindrisch ausgebildete Kupplungsglied (10a, 50) trägt an seinem Innendurchmesser die Aussparungen (20, 58) zur Aufnahme der Kugeln (9, 49) und ist mit diesem Innendurchmesser auf dem Aussendurchmesser der Buchse (7, 47) gelagert;

l) das Kupplungsglied (10a, 50) ist gegenüber Kolben (4, 44) und Buchse (7, 47) axial gesichert, derart, dass Kolben (4, 44), Buchse (7, 47) und Kupplungsglied (10a, 50) in axialer Richtung nur gemeinsam bewegbar sind;

m) ein mit der Welle (16, 54) drehfest verbundenes topfförmiges Kupplungsstück (30, 55) umfasst mit seiner topfförmigen Ausbildung das Kupplungsglied (10a, 50) und ist mit dem Kupplungsglied (10a, 50) an dessen äusserem Durchmesser drehfest und längsverschieblich verbunden.

2. Mechanische Schnell-Löseeinrichtung nach Anspruch 1, gekennzeichnet, durch folgendes Merkmal:

Die drehbare, von aussen betätigbare Welle besteht aus einer drehbaren, von aussen betätigbaren Buchse (54).

3. Mechanische Schnell-Löseeinrichtung nach Anspruch 1 oder 2, gekennzeichnet durch folgendes Merkmal:

Die drehfeste und längsverschiebliche Verbindung zwischen dem Kupplungsstück (30, 55) und dem Kupplungsglied (10a, 50) besteht aus einem Sechskant.

4. Mechanische Schnell-Löseeinrichtung nach wenigstens einem der vorhergehenden Ansprüche, gekennzeichnet durch folgendes Merkmal:

Der Kolben (4, 44) besteht aus einer Membran.

5. Mechanische Schnell-Löseeinrichtung nach wenigstens einem der vorhergehenden Ansprüche, gekennzeichnet durch folgendes Merkmal:

Der Federspeicher-Bremszylinder ist mit einem druckmittelbetätigten Bremszylinder funktionsmässig gekoppelt.

## Claims

1. Mechanical quick-release device for spring brake actuators, especially in vehicle braking systems, having the following features:

a) in a cylinder housing (1, 41) there is arranged a piston (4, 44) connected to a one-piece piston rod (13, 53), which piston can be brought into the braking position by the force of a compression spring (22, 60) arranged entirely inside the cylinder housing (1, 41) and acting within the outer periphery of the piston (4, 44) on the latter, and into a release position by being subjected to a pressure medium;

b) the connection between the piston (4, 44) and the piston rod (13, 53) comprises a ball-bearing locking mechanism (7, 9, 10a, 21 and 47, 49, 50, 59) having at least one ball bearing (9, 49);

c) the ball-bearing locking mechanism has a coupler member (10a, 50) having radial recesses (20, 58) for receiving the ball bearings (9, 49);

d) the coupler member (10a, 50) can be rotated into two positions in one of which (locking position) it locks the ball-bearing locking mechanism (7, 9, 10a, 21 and 47, 49, 50, 59) and in the other of which (release position) it unlocks the ball-bearing locking mechanism;

e) a torsion spring (12) is provided which returns the coupler member (10a, 50) to the locking position;

f) in order to rotate the coupler member (10a, 50) into the release position a shaft (16, 54) which projects into the cylinder housing (1, 41) and can be operated from outside, is provided;

characterised by the following features:

g) the ball-bearing locking mechanism (7, 9, 10a, 21 and 47, 49, 50, 59) has a sleeve (7, 47) which is pushed over the piston rod (13, 53) and arranged concentrically with the piston (4, 44) and is in operative connection with the piston (4, 44) in the direction in which the brake is actuated;

h) the sleeve (7, 47) contains radial bores (8, 48) for receiving the ball bearings (9, 49) and for securing them in the axial and circumferential directions;

i) the piston rod (13, 53) is provided on its outer diameter with an annular groove (21, 59) which receives the ball bearings (9, 49) when the coupler member (10a, 50) is in the locking position;

k) the coupler member (10a, 50), which is cylindrical in construction, has on its internal diameter the recesses (20, 58) for receiving the ball bearings (9, 49) and is mounted by means of this internal diameter on the outer diameter of the sleeve (7, 47);

l) the coupler member (10a, 50) is secured axially with respect to the piston (4, 44) and the sleeve (7, 47) in such a manner that the piston (4, 44), the sleeve (7, 47) and the coupler member (10a, 50) are only movable together in the axial direction;

m) the pot-shaped construction of a pot-shaped coupler piece (30, 55), which is connected to the shaft (16, 54) in such a manner that they must rotate together, surrounds the coupler member (10a, 50) and is connected to the outer diameter of the coupler member (10a, 50) in such a manner as to be longitudinally displaceable and to have to rotate with the coupler member.

2. Mechanical quick-release device according to claim 1, characterised by the following feature; the rotatable shaft that can be operated from outside comprises a rotatable sleeve (54) that can be operated from outside.

3. Mechanical quick-release device according to claim 1 or 2, characterised by the following feature: the connection between the coupler piece (30, 55) and the coupler member (10a, 50) in such a manner that they must rotate together but are longitudinally displaceable with respect to one another is effected by a hexagonal construction.

4. Mechanical quick-release device according to at least one of the preceding claims, characterised by the following feature: the piston (4, 44) comprises a diaphragm.

5. Mechanical quick-release device according to at least one of the preceding claims, characterised by the follwing feature: the spring brake actuator is coupled in an operational manner to a pressure medium-operated brake cylinder.

## Revendications

1. Dispositif mécanique de desserrage rapide pour cylindre de frein à ressort accumulateur, en particulier dans des installations de freinage pour véhicules, présentant les particularités suivantes:

a) dans un corps de cylindre (1, 41) est disposé un piston (4, 44) relié à une tige de piston (13, 53) d'un seul tenant, et qui peut être amené dans la position de freinage par la force d'un ressort de compression (22, 60) disposé entièrement dans le corps de cylindre (1, 41) et attaquant le piston (4, 44) à l'intérieur du pourtour de celui-ci, et peut être amené à la position de desserrage par sollicitation au moyen d'un fluide sous pression;

b) la liaison entre le piston (4, 44) et la tige de piston (13, 53) est constituée par un verrouillage à billes (7, 9, 10a, 21, ou 47, 49, 50, 59) comprenant au moins une bille (9, 49);

c) le verrouillage à billes comprend un organe d'accouplement (10a, 50) présentant des évidements radiaux (20, 58) destinés à recevoir des billes (9, 49);

d) l'organe d'accouplement (10a, 50) peut être amené par rotation dans deux positions dans l'une desquelles (position de verrouillage) il verrouille le verrouillage à billes (7, 9, 10a, 21 ou 47, 49, 50, 59) tandis que, dans l'autre (position de libération), il déverrouille le verrouillage à billes;

e) il est prévu un ressort de torsion (12) qui ramène l'organe d'accouplement (10a, 50) dans la position de verrouillage;

f) pour amener l'organe d'accouplement (10a, 50) par rotation dans la position de libération, il est prévu un arbre (16, 54) pouvant être actionné de l'extérieur et qui fait saillie dans le corps de cylindre (1, 41);

caractérisé en ce que:

g) le verrouillage à billes (7, 9, 10a, 21 ou 47, 49, 50, 59) présente une fourrure (7, 47) emmanchée sur la tige de piston (13, 53), disposée concentriquement au piston (4, 44) et qui est en liaison active avec le piston (4, 44) dans le sens de l'actionnement du frein;

h) la fourrure (7, 47) présente des perçages radiaux (8, 48) pour recevoir les billes (9, 49) et les retenir dans les directions axiale et circonférentielle;

i) la tige de piston (13, 53) est munie sur son diamètre extérieur d'une gorge annulaire (21, 59) qui reçoit les billes (9, 49) dans la position de verrouillage de l'organe d'accouplement (10a, 50);

k) l'organe d'accouplement (10a, 50) de configuration cylindrique porte sur son diamètre intérieur les évidements (20, 58) destinés à recevoir les billes (9, 49) et il est monté par ce diamètre intérieur sur le diamètre extérieur de la fourrure (7, 47);

l) l'organe d'accouplement (10a, 50) est verrouillé axialement par rapport au piston (4, 44) et à la fourrure (7, 47) de telle manière que le piston (4, 44), la fourrure (7, 47) et l'organe d'accouplement (10a, 50) ne peuvent se déplacer dans la direction axiale que conjointement;

m) une pièce d'accouplement (30, 55) en forme de godet, assemblée solidairement en rotation à l'arbre (16, 54), entoure l'organe d'accouplement (10a, 50) par sa formation en godet et est assemblée solidairement en rotation et mobile en translation axiale à l'organe d'accouplement (10a, 50) au niveau du diamètre extérieur de celui-ci.

2. Dispositif mécanique de desserrage rapide selon la revendication 1, caractérisé en ce que l'arbre tournant, pouvant être actionné de l'extérieur, est constitué par un manchon tournant (54) pouvant être actionné de l'extérieur.

3. Dispositif mécanique de desserrage rapide selon la revendication 1 ou 2, caractérisé en ce que la liaison solidaire en rotation et libre en translation axiale entre la pièce d'accouplement (30, 55) et l'organe d'accouplement (10a, 50) est constituée par un six pans.

4. Dispositif mécanique de desserrage rapide selon au moins l'une des revendications précédentes, caractérisé en ce que le piston (4, 44) est constitué par une membrane.

5. Dispositif mécanique de desserrage rapide selon au moins l'une des revendications précédentes, caractérisé en ce que le cylindre de frein à ressort est couplé fonctionnellement à un cylindre de frein actionné par fluide sous pression.

FIG. 1

SCHNITT B-B

EP 0 054 100 B2

FIG.2

SCHNITT B - B

EP 0 054 100 B2